# EUROPÄISCHE PATENTSCHRIFT

(11) **EP 4 568 860 B1**
(45) Veröffentlichungstag und Bekanntmachung des Hinweises auf die Patenterteilung: **06.05.2026**
(21) Anmeldenummer: 23749078.4
(22) Anmeldetag: 31.07.2023
(51) Int. Cl.: B60T 13/74, B61H 5/00, F16D 55/224

(54) **KOMPAKT-BREMSZANGE MIT ELEKTROMECHANISCHEM AKTUATOR, EXZENTERWELLENANTRIEB UND MECHANISCHEM NACHSTELLER, UND VERFAHREN ZUM BETREIBEN EINER SOLCHEN KOMPAKT-BREMSZANGE**
COMPACT BRAKE CALIPER WITH ELECTROMECHANICAL ACTUATOR, ECCENTRIC SHAFT DRIVE AND MECHANICAL ADJUSTER, AND METHOD FOR OPERATING SUCH A COMPACT BRAKE CALIPER
ÉTRIER DE FREIN COMPACT AVEC ACTIONNEUR ÉLECTROMÉCANIQUE, ENTRAÎNEMENT D'ARBRE EXCENTRIQUE ET RÉGLAGE MÉCANIQUE, ET PROCÉDÉ DE FONCTIONNEMENT D'UN TEL ÉTRIER DE FREIN COMPACT

(30) Priorität: 09.08.2022 DE 102022120077
(43) Veröffentlichungstag der Anmeldung: 18.06.2025
(73) Patentinhaber: KNORR-BREMSE Systeme für Schienenfahrzeuge GmbH, 80809 München (DE)
(72) Erfinder: MATHIEU, Michael, 86938 Schondorf am Ammersee (DE); FUDERER, Erich, 82256 Fürstenfeldbruck (DE); HÄMMERL, Bernhard, 82216 Maisach (DE); NIEPALA, Tomasz, 85375 Neufahrn (DE); JUNG, Alexander, 82131 Gauting (DE); KRAUS, Harry-Werner, 81825 München (DE); LIU, Cheng, 81829 München (DE)
(86) Internationale Anmeldenummer: PCT/EP2023/071192
(87) Internationale Veröffentlichungsnummer: WO 2024/033137

(56) Entgegenhaltungen:
- EP-A2- 1 384 638
- DE-A1- 10 106 374
- DE-A1- 19 945 702

## Beschreibung

Die Erfindung betrifft eine Kompakt-Bremszange mit elektromechanischem Aktor nach dem Oberbegriff des Anspruchs 1. Die Erfindung bezieht sich auch auf ein Verfahren zum Betreiben einer solchen Kompakt-Bremszange.

Kompakt-Bremszangen finden eine breite Anwendung in Bremssystemen von Schienenfahrzeugen. Sie bestehen im Wesentlichen aus einem Krafterzeuger, der für die Bereitstellung der Betriebs- bzw. Federspeicherkraft sorgt, einem Übersetzungsmodul für die Erhöhung der Zuspannkraft und einem Nachstellermodul, das den Verschleiß ausgleicht. Zu den weiteren Bestandteilen einer Bremszange gehört eine Konsole, welche die Befestigung der Bremseinheit im Drehgestell ermöglicht, die Zangenhebel, für die Übertragung der Zuspannkraft auf die Bremsscheibe und die Bremsbelaghalter mit Belägen.

Bei Schienenfahrzeugen gibt es mehrere Ansätze für die Erzeugung der Bremskraft. Langstrecken- oder Nahverkehrszüge werden häufig mit pneumatischen Systemen ausgestattet.

Bei Straßenbahnen kommt häufig ein hydraulisches Bremssystem zur Anwendung.

Eine Alternative stellt ein elektromechanischer Bremskrafterzeuger dar. Gegenüber dem pneumatischen System wird hier keine Druckluft benötigt wodurch sämtliche Druckluftleitungen und Ventile, Behälter und Verdichter entfallen können. Einen weiteren Vorteil bringen deutlich kürzere Reaktionszeiten beim Anlegen und Lösen der Bremse über die gesamte Zuglänge.

Bei den meisten elektromechanischen Bremskrafterzeugern handelt es sich um eine Ausführung in Form eines Bremszylinders, der entweder direkt oder mithilfe eines Bremshebels mit Bremsbacken verbunden ist. Ein Elektromotor arbeitet mit einem Untersetzungsgetriebe und einer Spindel, die die drehende Bewegung in eine lineare Bewegung umwandelt. Durch das Verändern der relativen Position von Spindel und Spindelmutter in einem Nachstellermodul wird der Verschleiß von Bremsbacken und Bremsscheibe nachgestellt.

Das Dokument DE 199 45 702 A1 beschreibt eine elektromechanische Kompakt-Bremszange für Schienenfahrzeuge. Hier wird die Bremskraft zu einem großen Anteil durch eine Druckfeder bzw. zwei Druckfedern erzeugt. Der über ein Getriebe wirkende Antriebsmotor spannt diese Federn beim Lösen der Bremse oder ergänzt die Federkraft in Bremsstellung. Der Verschleißnachsteller ist hier ebenfalls elektromechanisch ausgeführt und erfordert eine entsprechende Ansteuerung.

Die Aufgabe der Erfindung besteht darin, eine verbesserte Kompakt-Bremszange mit einem kostengünstigen elektromechanischen Aktuator bereitzustellen, der den Bauraum einer Kompakt-Bremszange einhält und eine geringe Ausfallrate aufweist.

Eine weitere Aufgabe ist es, ein verbessertes Verfahren zum Betreiben einer solchen Kompakt-Bremszange zu schaffen.

Die Aufgabe wird durch den Gegenstand des Anspruchs 1 gelöst.

Die weitere Aufgabe wird durch ein Verfahren nach Anspruch 15 gelöst

Ein Erfindungsgedanke besteht darin, in eine Kompakt-Bremszange mit einem Exzenterwellenantrieb einen elektromechanischen Aktuator zu integrieren.

Eine erfindungsgemäße Kompakt-Bremszange einer Scheibenbremse, insbesondere für Schienenfahrzeuge, umfasst zwei Zangenhebel, zwei Bremsbeläge, ein Nachstellermodul, einen elektromechanischen Bremskrafterzeuger und einen Exzenterwellenantrieb. Der elektromechanische Bremskrafterzeuger wirkt als ein Aktuatormodul mit dem Exzenterwellenantrieb zusammen und ist mit einem Gehäuse ausgebildet, in welchem ein Elektromotor, eine Hohlwelle, ein Gewindetrieb mit einer Spindelmutter und einer Gewindespindel, eine Motorbremse und eine Steuereinheit angeordnet sind.

Ein besonderer Vorteil hierin besteht, dass dieser Aktuator über einen Direktantrieb verfügt, d.h. das Motordrehmoment wirkt auf den Gewindetrieb und wird von diesem in eine Axialkraft umgewandelt.

Dabei ist weiterhin besonders vorteilhaft, dass die Axialkraft auf den Exzenterwellenantrieb der Exzenterwelle wirkt und so die Zuspannkraft der Bremse erzeugt. Auf diese Weise wird vorteilhaft kein zusätzliches Getriebe oder ein mechanischer Energiespeicher z.B. Druckfeder benötigt.

Die Anwendung in der Kompakt-Bremszange macht es möglich, zusätzlich vorteilhaft die Übersetzung der Exzenterwelle zu nutzen. Dadurch kann der elektromechanische Aktuator deutlich kleiner dimensioniert werden, was einen positiven Einfluss auf den Bauraum und die Gesamtkosten hat.

Ein erfindungsgemäßes Verfahren zum Betreiben einer Kompakt-Bremszange einer Scheibenbremse, insbesondere für Schienenfahrzeuge, aufweisend zwei Zangenhebel, zwei Bremsbeläge, ein Nachstellermodul, ein Aktuatormodul und einen Exzenterwellenantrieb, wobei das Aktuatormodul mit einem Gehäuse ausgebildet ist, in welchem ein Elektromotor, eine Hohlwelle, ein Gewindetrieb mit einer Spindelmutter und einer Gewindespindel, eine Motorbremse und eine Steuereinheit angeordnet sind, weist die folgenden Verfahrensschritte auf. (VS1) Zuspannen der Kompakt-Bremszange entweder für eine Betriebsbremsung oder für eine Feststellbremsung mittels Einschalten des Elektromotors des Aktuatormoduls in einer ersten Drehrichtung, wenn die Position des Elektromotors einem vorher festgelegten Wert oder Wertebereich einer gelösten Stellung der Kompakt-Bremszange entspricht und die Motorbremse des Aktuatormoduls in ihrem zweiten Betriebszustand ist, der anzeigt, dass die Hohlwelle des Aktuatormoduls nicht blockiert ist; (VS2) Ausschalten des Elektromotors und gleichzeitiges Einschalten des ersten Betriebszustand der Motorbremse, wenn Messwerte eines Kraftsensors und/oder eines Winkelsensors jeweils einen vorher festgelegten Wert erreichen bzw. überschreiten, welcher der zugespannten Stellung der Kompakt-Bremszange als Betriebsbremsstellung oder als Feststellbremsstellung entspricht, wobei die Hohlwelle blockiert wird und die zugespannte Stellung der Kompakt-Bremszange in der Betriebsbremsstellung oder in der Feststellbremsstellung aufrecht erhalten wird; und (VS3) Lösen der Kompakt-Bremszange aus der Betriebsbremsstellung oder aus der Feststellbremsstellung mittels Einschalten des zweiten Betriebszustandes der Motorbremse, wobei die Blockierung der Hohlwelle aufgehoben wird, und Einschalten des Elektromotors in einer zweiten Drehrichtung, welche entgegengesetzt zu der ersten Drehrichtung ist, wenn die Messwerte des Kraftsensors und/oder des Winkelsensors einem vorher festgelegten Wert oder Wertebereich der zugespannten Stellung der Kompakt-Bremszange in der Betriebsbremsstellung oder in der Feststellbremsstellung entsprechen und die Motorbremse in ihrem ersten Betriebszustand ist, der anzeigt, dass die Hohlwelle blockiert ist, und gleichzeitiges Abschalten des Elektromotor und Einschalten des ersten Betriebszustandes der Motorbremse, wobei die Hohlwelle blockiert wird und die gelöste Stellung der Kompakt-Bremszange aufrecht erhalten wird, wenn die Messwerte des Kraftsensors und/oder des Winkelsensors einen vorher festgelegten Wert erreichen bzw. unterschreiten, welcher der gelösten Stellung der Kompakt-Bremszange entspricht.

Mittels der Steuereinheit und des Kraftsensors und des Winkelsensors ergibt sich der Vorteil einer einfachen Durchführung des Verfahrens zum Betreiben der Kompakt-Bremszange.

Einen weiteren Vorteil bringen deutlich kürzere Reaktionszeiten beim Anlegen und Lösen der Bremse über die gesamte Zuglänge.

Weitere vorteilhafte Ausgestaltungen sind in den Unteransprüchen angegeben.

**In** einer Ausführung weist der Elektromotor einen elektrisch kommutierten Permanentmagnetmotor als Hohlwellenmotor mit einem Stator, der in dem Gehäuse befestigt ist, und mit einem drehbaren Rotor, welcher auf der Hohlwelle befestigt ist, auf. Dies ergibt den Vorteil eines Motors, der sich durch ein hohes Motordrehmoment auszeichnet. Außerdem ist ein vorteilhaft kompakter Aufbau möglich.

Eine weitere Ausführung sieht vor, dass der Gewindetrieb mit der Spindelmutter und der Gewindespindel in Ausnehmungen der Hohlwelle angeordnet ist, wobei die Spindelmutter in der Hohlwelle drehfest in Bezug auf die Hohlwelle angeordnet ist.

**In** einer noch weiteren Ausführung sind der Gewindetrieb mit der Spindelmutter und der Gewindespindel als ein Kugelgewindetrieb ausgebildet. Diese Funktionseinheiten sind mit hoher Qualität kostengünstig marktübliche Bauteile.

Eine andere Ausführung sieht vor, dass der Exzenterwellenantrieb drehfest mit einem Exzenterwellenhebel verbunden ist, welcher über sein freies Ende mit dem Aktuatormodul zusammenwirkend gekoppelt ist. Das ist besonders vorteilhaft, da weder ein zusätzliches Getriebe noch ein zusätzlicher mechanischer Energiespeicher, z.B. eine Druckfeder, erforderlich ist.

Es ist vorteilhaft, wenn an einem freien Ende der Gewindespindel, welches aus der Spindelmutter zu dem Exzenterwellenhebel hervorsteht, ein Druckstück verdrehfest in Bezug auf die Gewindespindel befestigt ist und mit dem Exzenterwellenhebel gekoppelt ist, da dies eine einfache Kopplungsmöglichkeit bietet.

Dabei ist es zudem von Vorteil, dass das Druckstück einen ersten Übertragungsabschnitt, einen zweiten Übertragungsabschnitt und einen Führungsabschnitt aufweist, welche einen U-förmigen Zwischenraum in Hakenform festlegen, wobei der Zwischenraum aufweist, welcher mit dem freien Ende des Exzenterwellenhebels über eine drehbare Stützrolle, welche zwischen dem ersten Übertragungsabschnitt, dem zweiten Übertragungsabschnitt und dem Führungsabschnitt angeordnet ist, zusammenwirkt und eine Kopplung zwischen dem Exzenterwellenhebel und dem Aktuatormodul bildet. Es ergibt sich ein vorteilhaft einfacher Aufbau.

**In** einer Ausführung ist das Druckstück mittels des Führungsabschnitts in einer Linearführung eines Motorschildes des Gehäuses axial verschiebbar geführt angeordnet und darin gegen Verdrehen um eine Spindelachse der Gewindespindel gesichert, wodurch die Gewindespindel axial in Richtung Spindelachse verschiebbar und gleichzeitig gegen Verdrehen gesichert angeordnet ist. Das ergibt einen vorteilhaft einfachen Aufbau.

Eine weitere Ausführung sieht vor, dass die Motorbremse als eine passive Motorbremse ausgebildet ist, wobei die Motorbremse mit einem ersten Abschnitt im Gehäuse befestigt und mit einem zweiten Abschnitt formschlüssig mit der Hohlwelle verbunden ist. Die passive Motorbremse ist vorteilhaft, da sie bei Stromlosigkeit eine Verbindungen zwischen ihren Abschnitten nicht aufhebt.

Die Motorbremse kann auch als eine aktive Bremse ausgeführt werden, welche Gegenstand einer eigenständigen Anmeldung sein kann.

Es ist vorteilhaft, wenn die Motorbremse aus einem ersten Betriebszustand, in welchem der im Gehäuse befestigte erste Abschnitt mit ihrem mit der Hohlwelle verbundenen zweiten Abschnitt eine verdrehfeste, z.B. formschlüssige oder reibschlüssige, Verbindung bildet und die Hohlwelle blockiert ist, in einen zweiten Betriebszustand, in welchem die feste Verbindung zwischen ihrem im Gehäuse befestigten ersten Abschnitt und ihrem mit der Hohlwelle verbundenen zweiten Abschnitt aufgehoben ist, wobei die Hohlwelle verdrehbar ist, und zurück schaltbar ist, da auf diese Weise der Gewindetrieb mit reibungsarmer Kugelumlaufspindel/Spindelmutter verwendet werden kann, der nicht selbsthemmend ist.

**In** einer anderen Ausführung ist es vorgesehen, dass ein Winkelsensor mit der Hohlwelle gekoppelt ist, Winkelstellungen der Hohlwelle erfasst und mit einer Steuerung der Steuereinheit zur Übertragung von erfassten Messdaten der Winkelstellungen der Hohlwelle verbunden ist. Damit ist es vorteilhaft möglich, nicht nur die Stellung der Zangenhebel der Kompakt-Bremszange zu erfassen, sondern auch den Elektromotor zu steuern und zu regeln.

Eine noch weitere Ausführung sieht vor, dass die Hohlwelle über ein Axiallager auf einen im Gehäuse angeordneten Kraftsensor abgestützt ist, welcher mit der Steuerung der Steuereinheit zur Übertragung von erfassten Messdaten verbunden ist. Dies ist besonders vorteilhaft, da so die aktuelle Zuspannkraft erfasst werden kann.

Es ist vorteilhaft, dass das Aktuatormodul mit dem Gehäuse, dem Elektromotor, der Hohlwelle, dem Gewindetrieb mit der Spindelmutter und der Gewindespindel, der Motorbremse und der Steuereinheit eine komplett vormontierte Baueinheit ist, da auf diese Weise ein schneller und einfacher Ein- und Ausbau des Aktuatormoduls bei Montage und Wartung erfolgen kann.

Denn es sind alle elektromechanischen Komponente des Aktuators in einem vormontierbaren Modul zusammengebaut. Elektromotor, Gewindetrieb, Motorbremse, Elektronik und sämtliche Sensoren werden in einer separaten Unterbaugruppe montiert und anschließend in das Bremszangengehäuse eingefügt.

Eine noch weitere Ausführung sieht vor, dass das Nachstellermodul ein mechanisches Nachstellermodul ist und über eine Druckstange in Zusammenwirkung mit dem Exzenterwellenantrieb angetrieben ist. Dies ist vorteilhaft, da die Verwendung eines mechanischen Nachstellermoduls durch seinen langjährigen Einsatz in Kompaktzangen eine technisch sehr sichere und kostengünstige Lösung darstellt.

**In** einer Ausführung des Verfahrens werden die Messwerte des Kraftsensors und des Winkelsensors ständig erfasst, überwacht und für eine kontinuierliche Regelung verwendet. Damit ist eine vorteilhafte Kontrolle und Überwachung sowie eine kontinuierliche Regelung ermöglicht.

Weiterhin ist es in einer Ausführung vorteilhaft möglich, dass die erfassten Messwerte des Kraftsensors und des Winkelsensors als Verlauf oder End- bzw. Momentanwerte zur Überwachung und/oder Dokumentation der Brems- und Lösevorgänge der Kompakt-Bremszange sowie für ein kontrolliertes Verschleißmanagement gespeichert werden. Damit sind neue Möglichkeiten beim Thema Überwachung von Bremseinheiten oder kontrolliertes Verschleißmanagement gegeben.

Ein Ausführungsbeispiel der Erfindung wird nachfolgend anhand der beigefügten Zeichnungen beschrieben. Die Erfindung ist nicht auf dieses Ausführungsbeispiel beschränkt. Insbesondere sind einzelne Merkmale des nachfolgenden Ausführungsbeispiels nicht nur bei diesem, sondern auch bei anderen Ausführungsbeispielen einsetzbar. Es zeigen:
- Figur 1: eine schematische Teilschnittansicht eines Ausführungsbeispiels einer erfindungsgemäßen Kompakt-Bremszange;
- Figur 2: eine schematische Schnittansicht eines Aktuatormoduls des Ausführungsbeispiels der erfindungsgemäßen Kompakt-Bremszange nach Figur 1;
- Figur 3: eine schematische Draufsicht einer Unterseite des Ausführungsbeispiels der erfindungsgemäßen Kompakt-Bremszange nach Figur 1;
- Figur 4: eine schematische Seitenansicht des Ausführungsbeispiels der erfindungsgemäßen Kompakt-Bremszange nach Figur 1; und
- Figur 5: ein schematisches Flussdiagramm eines Ausführungsbeispiels eines erfindungsgemäßen Verfahrens.

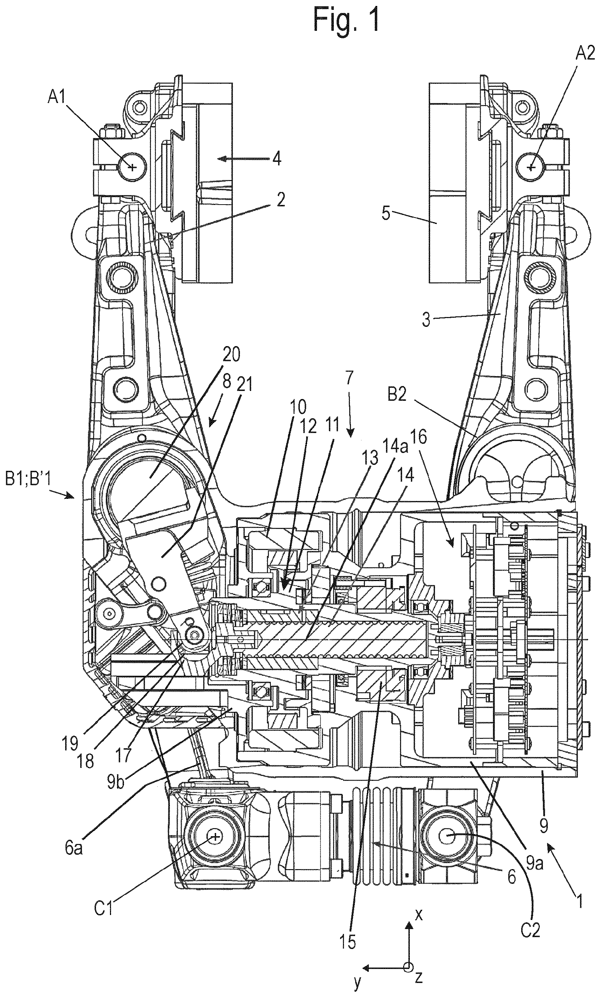

**Figur** 1 zeigt eine schematische Teilschnittansicht eines Ausführungsbeispiels einer erfindungsgemäßen Kompakt-Bremszange 1.

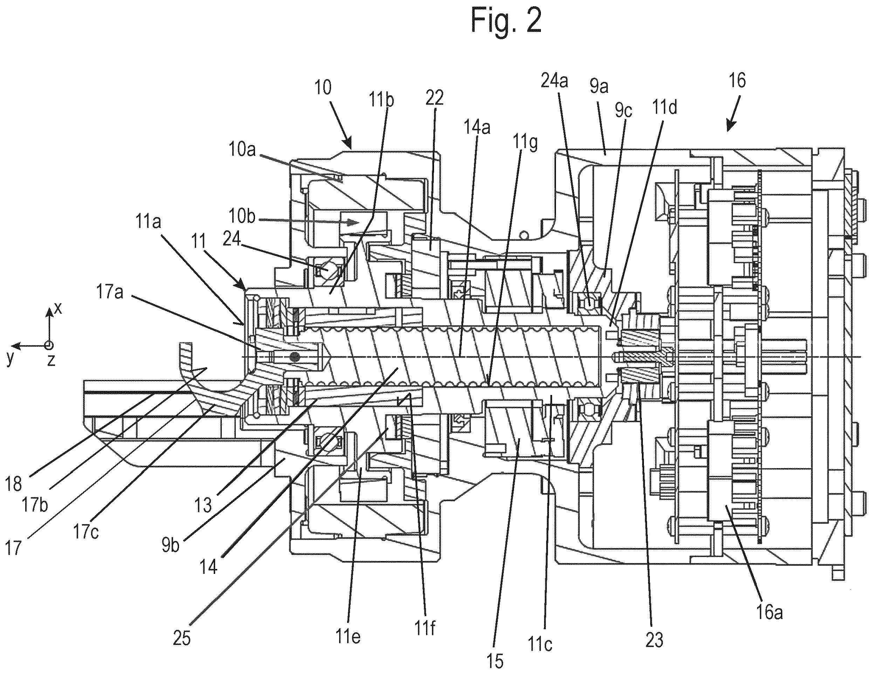

Figur 2 stellt eine schematische Schnittansicht eines Aktuatormoduls 7 des Ausführungsbeispiels der erfindungsgemäßen Kompakt-Bremszange 1 nach Figur 1 dar.

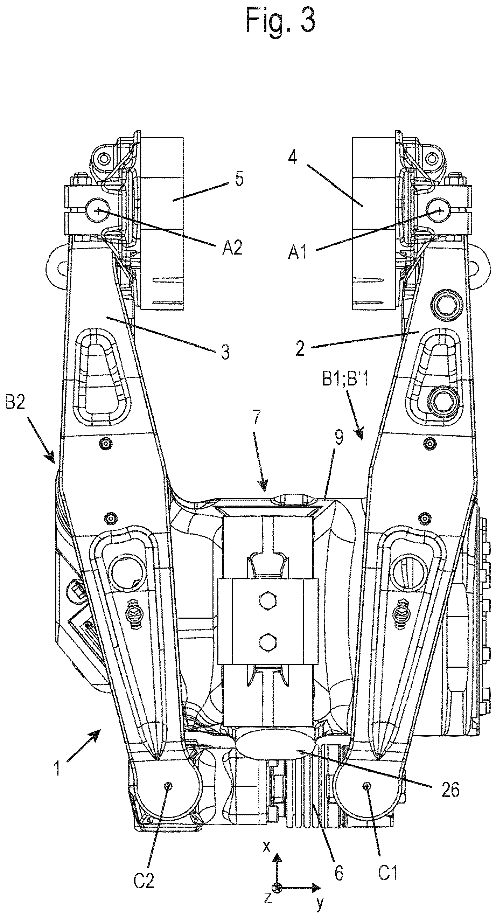

In **Figur** 3 ist eine schematische Draufsicht einer Unterseite des Ausführungsbeispiels der erfindungsgemäßen Kompakt-Bremszange nach Figur 1 gezeigt.

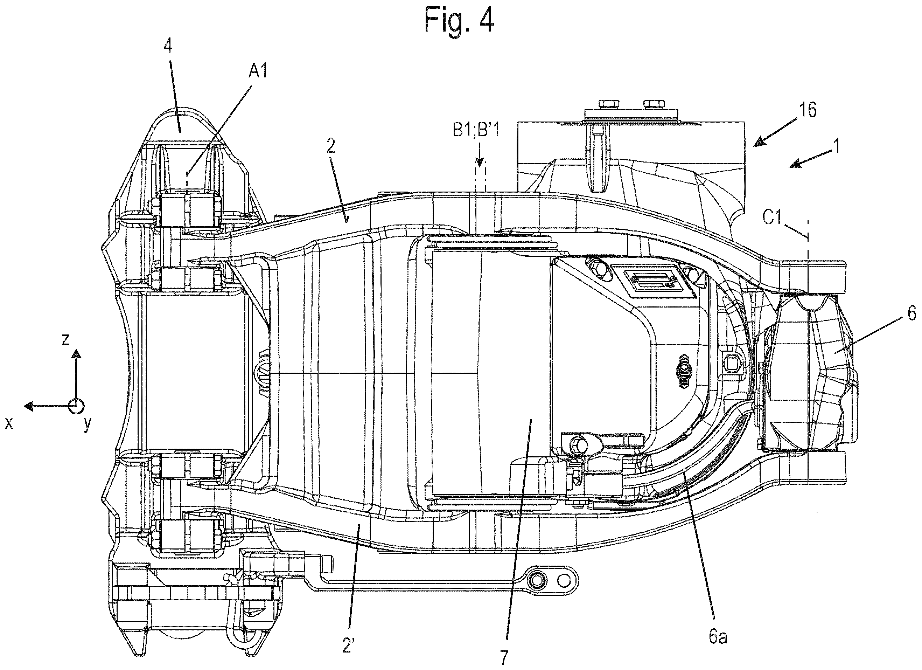

**Figur** 4 zeigt eine schematische Seitenansicht des Ausführungsbeispiels der erfindungsgemäßen Kompakt-Bremszange nach Figur 1.

Koordinaten x, y, z dienen in den Figuren zur Orientierung. Die Koordinate x verläuft in Längsrichtung der Kompakt-Bremszange 1, die Koordinate y quer dazu, wobei die Koordinate z hier eine vertikale Richtung bildet. Andere Lagen der Kompakt-Bremszange 1 sind natürlich auch möglich.

Die Kompakt-Bremszange 1 ist hier mit einem Exzenterwellenantrieb 8 ausgeführt und bildet eine Scheibenbremse für ein Schienenfahrzeug.

Die Kompakt-Bremszange 1 umfasst hier zwei doppelwangige Zangenhebel 2, 3, zwei Bremsbeläge 4, 5, ein Nachstellermodul 6, ein Aktuatormodul 7 und den Exzenterwellenantrieb 8.

Die doppelwangigen Zangenhebel 2, 3 sind jeweils in zwei Horizontalebenen (x-y-Ebene) angeordnet. In der Seitenansicht in Figur 3 ist der doppelwangige Zangenhebel 2, 2' gezeigt.

Die doppelwangigen Zangenhebel 2, 3 sind mit einem jeweiligen Gelenk mit einer jeweiligen Gelenkachse B1, B2, die in z-Richtung verlaufen und jeden Zangenhebel 2, 3 in zwei gleichlange bzw. unterschiedlich lange Hebelabschnitte aufteilen, verschwenkbar angebracht. Die Gelenke B1, B2 sind sowohl in den beiden Horizontalebenen und in Vertikalrichtung jeweils durch nicht gezeigte Stangenabschnitte verbunden.

Auf einer Seite der Zangenhebel 2, 3 sind die Bremsbeläge 4, 5 über Belaghalter an freien Enden der Zangenhebel 2, 3 in Gelenken mit in z-Richtung verlaufenden Gelenkachsen A1, A2 verschwenkbar angebracht. An den anderen freien Enden der Zangenhebel 2, 3 ist das Nachstellermodul 6 in Gelenken C mit in z-Richtung verlaufenden Gelenkachsen C1, C2 verschwenkbar angelenkt. Die Bremsbeläge 4, 5 sind beidseitig einer hier nicht dargestellten Bremsscheibe, die als Wellen-Bremsscheibe oder Rad-Bremsscheibe ausgeführt ist, angeordnet.

In der einen Gelenkachse B1 ist der Exzenterwellenantrieb 8 mit einer Exzenterwelle 20 angeordnet. Die Exzenterwelle 20 ist drehfest mit einem Exzenterwellenhebel 21 verbunden.

Das Dokument DE 195 14 463 C1 gibt eine ausführliche Beschreibung des Aufbaus und der Funktion einer konventionellen Kompakt-Bremszange 1 und eines üblichen Exzenterwellenantriebs an, worauf hier verwiesen wird.

Der Exzenterwellenhebel 21 ist hier über sein freies Ende mit dem Aktuatormodul 7 zusammenwirkend gekoppelt. Dies wird unten noch im Detail beschrieben.

Das Nachstellermodul 6 stellt sicher, dass das Bremsspiel, das auch als Lüftspiel bezeichnet wird, während der Betriebsdauer bei gelöster Bremse konstant gehalten wird.

Nach jedem Bremsvorgang wird der neu entstandene Verschleiß der Bremsbelege 4, 5 und der Bremsscheibe durch das Nachstellermodul 6 kompensiert. Die Steuerung des Nachstellermoduls funktioniert hier rein mechanisch mit einem Antrieb an der Exzenterwelle 20 und Betätigung des Nachstellermoduls 6 mithilfe einer Druckstange 6a (siehe Figur 1 und Figur 4).

Die allgemeine Funktionsweise eines Nachstellermoduls 6 ist in den Dokumenten EP 2 531 741 B1 oder DE 44 31 321 C2 beschrieben, auf welche hier verwiesen wird.

Das Aktuatormodul 7 bildet einen elektromechanischen Krafterzeuger und ist in die Kompakt-Bremszange 1 in einem Bereich zwischen dem Nachstellermodul 6, d.h. den Gelenkachsen C1, C2 und den Gelenkachsen B1, B2 in einem Gehäuse 9 eingebaut. Das Gehäuse 9 ermöglicht die Befestigung der Kompakt-Bremszange 1 z.B. in einem Drehgestell eines Schienenfahrzeugs.

Das Aktuatormodul 7 als elektromechanischer Krafterzeuger ist komplett vormontierbar und beinhaltet zu den mechanischen alle elektrischen Komponenten.

Das Aktuatormodul 7 umfasst ein Aktuatormodulgehäuse 9a, einen Elektromotor 10, eine Hohlwelle 11, einen Gewindetrieb 12 mit einer Spindelmutter 13 und einer Gewindespindel 14, eine Motorbremse 15 und eine Steuereinheit 16.

Der Elektromotor 10 weist einen elektrisch kommutierten Permanentmagnetmotor (Hohlwellenmotor) auf, der sich durch ein besonders hohes Motordrehmoment auszeichnet. Der Elektromotor 10 umfasst einen in dem Aktuatormodulgehäuse 9a befestigten Stator 10a und einen drehbaren Rotor 10b.

Der Rotor 10b ist hier auf einem Flansch 11e der Hohlwelle 11 fest angebracht und zusammen mit der Hohlwelle 11 um eine in y-Richtung verlaufende Spindelachse 14a verdrehbar angeordnet.

Die Hohlwelle 11 umfasst ein erstes Wellenende 11a, einen ersten Lagerabschnitt 11b, einen zweiten Lagerabschnitt 11c, ein zweites Wellenende 11d, einen Flansch 11e, eine erste Ausnehmung 11f und eine zweite Ausnehmung 11g.

Der Flansch 11e der Hohlwelle 11 ist umlaufend auf dem ersten Lagerabschnitt 11b der Hohlwelle 11 angeordnet. Ein freies Ende des ersten Lagerabschnitts 11b weist zu dem Exzenterwellenhebel 21 und bildet das erste Wellenende 11a der Hohlwelle 11.

An seinem anderen Ende ist der erste Lagerabschnitt 11b der Hohlwelle 11 mit dem zweiten Lagerabschnitt 11c der Hohlwelle 11 verbunden.

Das freie Ende des zweiten Lagerabschnitts 11c bildet das zweite Wellenende 11d in Form einer Wand.

In dem ersten Lagerabschnitt 11b der Hohlwelle 11 ist eine erste Ausnehmung 11 f eingeformt. Die erste Ausnehmung 11f erstreckt sich durch eine Öffnung des ersten Wellenendes 11a.

In der ersten Ausnehmung 11f der Hohlwelle 11 ist die Spindelmutter 13 drehfest in Bezug auf die Hohlwelle 11 angeordnet und dreht sich mit der Hohlwelle 11 um die Spindelachse 14a.

An den ersten Lagerabschnitt 11b der Hohlwelle 11 schließt sich der zweite Lagerabschnitt 11c an, in welchem eine Verlängerung der ersten Ausnehmung 11f als eine zweite Ausnehmung 11g eingeformt ist. Hier ist ein Innendurchmesser der zweiten Ausnehmung 11g kleiner als ein Innendurchmesser der ersten Ausnehmung 11f. Die zweite Ausnehmung 11g ist an dem anderen Ende der Hohlwelle 11 mit der Wand des zweiten Wellenendes 11d verschlossen.

Die Spindelmutter 13 weist ein Innengewinde auf, welches mit einem Außengewinde der Gewindespindel 14 in Eingriff steht. Die Spindelmutter 13 und die Gewindespindel 14 bilden den Gewindetrieb 12 und sind hier als ein Kugelgewindetrieb ausgebildet.

Die Gewindespindel 14 erstreckt sich hier in y-Richtung durch die Hohlwelle 11, durch die in der ersten Ausnehmung 11f angeordnete Spindelmutter 13 und weiter in die zweite Ausnehmung 11f der Hohlwelle 11 hinein bis kurz vor die Wand des zweiten Wellenendes 11d. Der Innendurchmesser der zweiten Ausnehmung 11g korrespondiert zu dem Außendurchmesser der Gewindespindel 14.

An dem freien Ende der Gewindespindel 14, welches aus der Spindelmutter 13 in der ersten Ausnehmung 11f zu dem Exzenterwellenhebel 21 hervorsteht, ist ein Druckstück 17 befestigt.

Das Druckstück 17 ist hakenförmig mit einem ersten Übertragungsabschnitt 17a, einem zweiten Übertragungsabschnitt 17b und einem Führungsabschnitt 17c ausgebildet. An dem Ende des Führungsabschnitts 17c, welches zu dem freien Ende der Gewindespindel 14 weist, ist der erste Übertragungsabschnitt 17a angeformt. An dem anderen, freien Ende des Übertragungsabschnitts 17c ist der zweite Übertragungsabschnitt 17b angebracht. Der erste Übertragungsabschnitt 17a bildet zudem eine Befestigung des Druckstücks 17 an dem freien Ende der Gewindespindel 14. Die Übertragungsabschnitt 17a, 17b und der Führungsabschnitt 17c legen einen U-förmigen Zwischenraum in Hakenform fest, der auch als ein Umgriff bezeichnet wird.

An einer Seite des Druckstücks 17 ist dieses in einer Linearführung 18 eines Motorschilds 9b des Gehäuses 9 mittels des Führungsabschnitts 17c axial verschiebbar geführt angeordnet und gegen Verdrehen um die Spindelachse 14a gesichert. Auf diese Weise ist die Gewindespindel 14 axial in Richtung ihrer in y-Richtung verlaufenden Spindelachse 14a verschiebbar und gleichzeitig gegen Verdrehen gesichert.

Das erste Wellenende 11a der Hohlwelle 11 steht durch eine Öffnung in dem Motorschild 9b in Richtung auf den Exzenterwellenhebel 21 hervor.

Das freie Ende des Exzenterwellenhebels 21 weist eine drehbare Stützrolle 19 auf, welche in dem U-förmigen Zwischenraum des Druckstücks 17 zwischen den Übertragungsabschnitten 17a, 17b des Druckstücks 17 aufgenommen ist und somit eine Kopplung zwischen dem Exzenterwellenhebel 21 und dem Aktuatormodul 7 bildet.

Die Gewindespindel 14 des Kugelgewindetriebs (Gewindetrieb 12) steht auf diese Weise in Zusammenwirkung mit der im Exzenterwellenhebel 21 befindliche Stützrolle 19 und kann Druck- und Zugkräfte auf die Stützrolle 19 und somit auf den Exzenterwellenhebel 21 übertragen.

Die mittels des Elektromotors 10 erzeugte Drehbewegung des Rotors 10b wird von der Hohlwelle 11 auf die Spindelmutter 13 übertragen. Der Gewindetrieb 12, bestehend aus der drehbaren Spindelmutter 13 und der drehfesten Gewindespindel 14, wandelt die Drehbewegung der Spindelmutter 13 in eine axiale Linearbewegung der Gewindespindel 14 um.

Auf diese Weise wird die in der Gewindespindel 14 entstehende Axialkraft über die Hohlwelle 11 und ein auf dem ersten Lagerabschnitt 11b im Bereich des Flansches 11e der Hohlwelle 11 angeordnetes Axiallager 25 auf einen im Aktuatormodulgehäuse 9a angeordneten Kraftsensor 22 abgestützt.

Der Kraftsensor 22 ist mit einer Steuerung 16a der Steuereinheit 16 zur Übertragung der erfassten Messwerte bzw. Messdaten der Abstützkraft verbunden. Diese Verbindung ist hier elektrisch leitend ausgebildet.

Die Steuereinheit 16 ist als ein Modul mit einer Steuer-, Kontroll- und Leistungselektronik ausgebildet.

Die Steuerung 16a umfasst eine oder mehrere Steuer-, Kontroll- und Leistungselektronikeinheiten.

Die Axialbewegung der Gewindespindel 14 treibt somit den Exzenterwellenhebel 21 des Exzenterwellenantriebs 8 zum Zuspannen bzw. Lösen der Kompakt-Bremszange 1 an.

Wenn ein Anlegen der Bremse erfolgt, d.h. wenn die Kompakt-Bremszange 1 zugespannt wird, drückt das Druckstück 17 mit dem ersten Übertragungsabschnitt 17a auf die Stützrolle 19 in y-Richtung und die Bremskraft wird aufgebaut. Beim Lösen der Bremse kommt es zu einer Reduktion der von dem ersten Übertragungsabschnitt 17a des Druckstücks 17 auf die Stützrolle 19 übertragenen Kraft, bis diese zu Null wird. Im weiteren Verlauf werden die Bremsbeläge 4, 5 von der Bremsscheibe entfernt, bis das vorher festgelegte Lüftspiel hergestellt wird, indem die Stützrolle 19 mithilfe des zweiten Übertragungsabschnitts 17b des Druckstücks 17 (Umgriff) in negativer y-Richtung weggezogen wird.

Die Hohlwelle 11 ist mit einem ersten Lager 24 auf dem ersten Lagerabschnitt 11b der Hohlwelle 11, hier neben dem Flansch 11e, in dem Motorschild 9b gegenüber dem Aktuatormodulgehäuse 9a und mit einem zweiten Lager 24a auf dem zweiten Lagerabschnitt 11c der Hohlwelle 11 im Bereich des zweiten Wellenendes 11d in einem Lagerschild 9c in dem Aktuatormodulgehäuse 9a um die Spindelachse 14a verdrehbar gelagert.

Das Motorschild 9b verschließt das Aktuatormodulgehäuse 9a in Richtung auf den Exzenterwellenhebel 21 hin.

Das Lagerschild 9c trennt einen ersten Bereich des Aktuatormodulgehäuses 9a, in welchem die Hohlwelle 11 angeordnet ist, von einem zweiten Bereich des Gehäuses 9a, in dem die Steuereinheit 16 angeordnet ist.

Im Bereich des zweiten Lagerabschnitts11c der Hohlwelle 11 ist die Motorbremse 15 angeordnet.

Die Motorbremse ist mit einem ersten Abschnitt im Aktuatormodulgehäuse 9a befestigt, z.B. fest verschraubt, und mit einem zweiten Abschnitt formschlüssig mit der Hohlwelle 11 verbunden, hier mit dem zweiten Lagerabschnitt 11c der Hohlwelle 11.

Die Motorbremse 15 kann unterschiedlich aufgebaut sein, beispielsweise als eine schaltbare elektrische, elektromagnetische oder/und elektromechanische Kupplung. Andere Ausführungen sind natürlich auch möglich.

Die Funktion der Motorbremse 15 besteht darin, in einem ersten Betriebszustand der Motorbremse 15 zwischen ihrem im Aktuatormodulgehäuse 9a befestigten ersten Abschnitt und ihrem mit der Hohlwelle 11 verbundenen zweiten Abschnitt eine verdrehfeste, z.B. formschlüssige oder reibschlüssige, Verbindung herzustellen, wobei die Hohlwelle 11 blockiert ist, und in einem zweiten Betriebszustand der Motorbremse 15 die feste Verbindung zwischen ihrem im Aktuatormodulgehäuse 9a befestigten ersten Abschnitt und ihrem mit der Hohlwelle 11 verbundenen zweiten Abschnitt aufzuheben, wobei die Hohlwelle 11 um die Spindelachse 14a verdrehbar ist.

Die Motorbremse 15 ist hier als eine passive Motorbremse 15 ausgebildet. Mit anderen Worten, ohne Aktivierung, z.B. als elektrisch schaltbare Kupplung im stromlosen Zustand, befindet sich die Motorbremse 15 in ihrem ersten Betriebszustand, wobei die Hohlwelle 11 blockiert ist. Mit Aktivierung, z.B. z.B. als elektrisch schaltbare Kupplung im bestromten Zustand, befindet sich die Motorbremse 15 in ihrem zweiten Betriebszustand, wobei die Hohlwelle 11 nicht blockiert und verdrehbar ist.

Auf diese Weise dient die Motorbremse 15 dazu,
- die gelöste Stellung der Kompakt-Bremszange 1 aufrechtzuerhalten,
- eine eingelegte Bremse ohne Energiezufuhr von außen zu fixieren,
- die Feststellbremse ohne Energiezufuhr von außen aufrechtzuerhalten.

Die Motorbremse 15 kann auch als eine aktive Bremse ausgeführt werden, welche Gegenstand einer eigenständigen Anmeldung sein kann.

In der Steuereinheit 16 in dem zweiten Bereich des Aktuatormodulgehäuses 9a des vormontierbaren Aktuatormoduls 7 befindet sich eine elektronische Steuerung 16a des Aktuatormoduls. Sie dient zur Auswertung der Messdaten von Sensoren und zur Ansteuerung des Aktuators, d.h. des Elektromotors 10 und der Motorbremse 15 und hier nicht gezeigter weiterer elektrischer und/oder elektronischer Funktionseinheiten.

An dem zweiten Wellenende 11d, d.h. Stirnseitig des zweiten Wellenendes 11d der Hohlwelle 11 ist ein Rotor eines Winkelsensors 23 montiert, der für die Ansteuerung des Elektromotors 10 erforderlich ist. Der Winkelsensor 23 erfasst Winkelstellungen der Hohlwelle 11 und überträgt die dazugehörigen Messdaten in die Steuerung 16a der Steuereinheit 16, mit welcher der Winkelsensor 23 verbunden (hier elektrisch leitend verbunden) ist.

Ein elektrischer Anschluss 26 für die notwendigen Anschlusskabel der Steuereinheit 16 des Aktuatormoduls 7 ist an der Steuereinheit 16 an dem Aktuatormodulgehäuse 9a angebracht. In Figur 3 ist beispielhaft gezeigt, dass der elektrische Anschluss 26 an der Unterseite der Kompakt-Bremszange 1 in einem Bereich zwischen den Gelenkachsen C1, C2 angeordnet ist. Natürlich kann auch eine andere Position des elektrischen Anschlusses 26 möglich sein. Es ist auch denkbar, dass mehrere elektrische Anschlüsse 26 vorgesehen sein können.

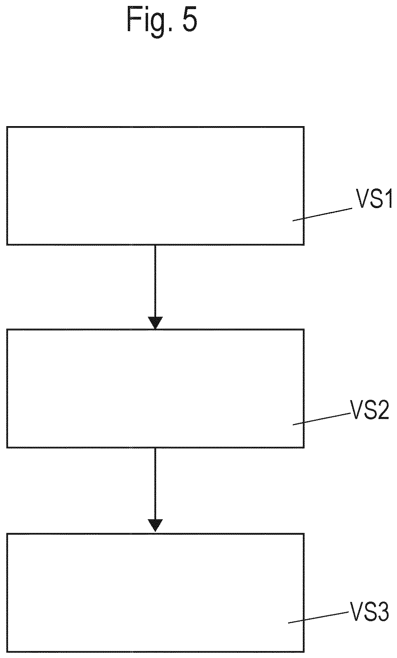

In **Figur** 5 ist ein schematisches Flussdiagramm eines Ausführungsbeispiels eines erfindungsgemäßen Verfahrens zum Betreiben der erfindungsgemäßen Kompakt-Bremszange 1 dargestellt.

In einem ersten Verfahrensschritt VS1 wird die Kompakt-Bremszange 1 entweder für eine Betriebsbremsung oder für eine Feststellbremsung zugespannt. Dazu werden zuerst die Position des Elektromotors 10 des Aktuatormoduls 7 mittels des Winkelsensors 23 und der Betriebszustand der Motorbremse 15 erfasst.

Wenn die Position des Elektromotors 10 einem vorher festgelegten Wert oder Wertebereich der gelösten Stellung der Kompakt-Bremszange 1 entspricht und die Motorbremse 15 in ihrem zweiten Betriebszustand ist, der anzeigt, dass die Hohlwelle 11 nicht blockiert ist, wird der Elektromotor 10 in einer ersten Drehrichtung eingeschaltet, in welcher die Kompakt-Bremszange 1 zugespannt wird.

Dabei werden die Messwerte des Kraftsensors 22 und des Winkelsensors 23 erfasst.

Sobald die Messwerte des Kraftsensors 22 und des Winkelsensors 23 jeweils einen vorher festgelegten Wert erreichen bzw. überschreiten, welcher der zugespannten Stellung der Kompakt-Bremszange 1 als Betriebsbremsstellung oder als Feststellbremsstellung entspricht, werden in einem zweiten Verfahrensschritt VS2 gleichzeitig der Elektromotor 10 abgeschaltet und der erste Betriebszustand der Motorbremse 15 eingeschaltet, wobei die Hohlwelle 11 blockiert wird und die zugespannte Stellung der Kompakt-Bremszange 1 in der Betriebsbremsstellung oder in der Feststellbremsstellung aufrecht erhalten wird.

In einem dritten Verfahrensschritt VS3 wird die Kompakt-Bremszange 1 gelöst. Dazu werden zuerst die Position des Elektromotors 10 des Aktuatormoduls 7 mittels des Winkelsensors 23 und der Betriebszustand der Motorbremse 15 erfasst.

Wenn die Messwerte des Kraftsensors 22 und des Winkelsensors 23 einem vorher festgelegten Wert oder Wertebereich der zugespannten Stellung der Kompakt-Bremszange 1 in der Betriebsbremsstellung oder in der Feststellbremsstellung entsprechen und die Motorbremse 15 in ihrem ersten Betriebszustand ist, der anzeigt, dass die Hohlwelle 11 blockiert ist, wird die Motorbremse 15 in ihren zweiten Betriebszustand geschaltet, wobei die Blockierung der Hohlwelle 11 aufgehoben wird, und der Elektromotor 10 wird in einer zweiten Drehrichtung, welche entgegengesetzt zu der ersten Drehrichtung ist, eingeschaltet, in welcher die Kompakt-Bremszange 1 gelöst wird.

Dabei werden die Messwerte des Kraftsensors 22 und des Winkelsensors 23 erfasst.

Sobald die Messwerte des Kraftsensors 22 und des Winkelsensors 23 einen vorher festgelegten Wert erreichen bzw. unterschreiten, welcher der gelösten Stellung der Kompakt-Bremszange 1 entspricht, werden gleichzeitig der Elektromotor 10 abgeschaltet und der erste Betriebszustand der Motorbremse 15 eingeschaltet, wobei die Hohlwelle 11 blockiert wird und die gelöste Stellung der Kompakt-Bremszange 1 aufrecht erhalten wird.

Die Messwerte des Kraftsensors 22 und des Winkelsensors 23 werden ständig überwacht und können als Verlauf oder End- bzw. Momentanwerte zur Überwachung und/oder Dokumentation der Brems- und Lösevorgänge sowie für ein kontrolliertes Verschleißmanagement gespeichert werden.

Das oben beschriebene Ausführungsbeispiel der Kompakt-Bremszange ist als eine Radbremszange vorgesehen. Natürlich ist eine Anwendung als Kompakt-Bremszange als eine Wellenbremszange ebenso möglich.

Die Erfindung ist durch das oben angegebene Ausführungsbeispiel nicht eingeschränkt, sondern im Rahmen der Ansprüche modifizierbar.

### Bezugszeichenliste

- 1: Kompakt-Bremszange
- 2, 2'; 3: Zangenhebel
- 4, 5: Bremsbelag
- 6: Nachstellermodul
- 6a: Druckstange
- 7: Aktuatormodul
- 8: Exzenterwellenantrieb
- 9: Gehäuse
- 9a: Aktuatormodulgehäuse
- 9b: Motorschild
- 9c: Lagerschild
- 10: Elektromotor
- 10a: Stator
- 10b: Rotor
- 11: Hohlwelle
- 11a: Wellenende
- 11b, 11c: Lagerabschnitt
- 11d: Wellenende
- 11e: Flansch
- 11f, 11g: Ausnehmung
- 12: Gewindetrieb
- 13: Spindelmutter
- 14: Gewindespindel
- 14a: Spindelachse
- 15: Motorbremse
- 16: Steuereinheit
- 16a: Steuerung
- 17: Druckstück
- 17a, 17b: Übertragungsabschnitt
- 17c: Führungsabschnitt
- 18: Linearführung
- 19: Stützrolle
- 20: Exzenterwelle
- 21: Exzenterwellenhebel
- 22: Kraftsensor
- 23: Winkelsensor
- 24, 24a: Lager
- 25: Axiallager
- 26: Elektrischer Anschluss

- A1, A2; B1, B2; C1, C2: Gelenkachse
- B'1: Exzenterachse
- VS1, VS2, VS3: Verfahrensschritt
- x, y, z: Koordinaten

## Patentansprüche

1. Kompakt-Bremszange (1) einer Scheibenbremse, insbesondere für Schienenfahrzeuge, aufweisend zwei Zangenhebel (2, 3), zwei Bremsbeläge (4, 5), ein Nachstellermodul (6), ein elektromechanischer Bremskrafterzeuger und ein Exzenterwellenantrieb (8),
**dadurch gekennzeichnet, dass**
der elektromechanische Bremskrafterzeuger als ein Aktuatormodul (7) mit dem Exzenterwellenantrieb (8) zusammenwirkt und mit einem Aktuatormodulgehäuse (9a) ausgebildet ist, in welchem ein Elektromotor (10), eine Hohlwelle (11), ein Gewindetrieb (12) mit einer Spindelmutter (13) und einer Gewindespindel (14), eine Motorbremse (15) und eine Steuereinheit (16) angeordnet sind.

2. Kompakt-Bremszange (1) nach Anspruch 1, **dadurch gekennzeichnet, dass** der Elektromotor (10) einen elektrisch kommutierten Permanentmagnetmotor als Hohlwellenmotor mit einem Stator (10a), der in dem Aktuatormodulgehäuse (9a) befestigt ist, und mit einem drehbaren Rotor (10b), welcher auf der Hohlwelle (11) befestigt ist, aufweist.

3. Kompakt-Bremszange (1) nach Anspruch 1 oder 2, **dadurch gekennzeichnet, dass** der Gewindetrieb (12) mit der Spindelmutter (13) und der Gewindespindel (14) in Ausnehmungen (11f, 11g) der Hohlwelle (11) angeordnet ist, wobei die Spindelmutter (13) in der Hohlwelle (11) drehfest in Bezug auf die Hohlwelle (11) angeordnet ist.

4. Kompakt-Bremszange (1) nach einem der vorhergehenden Ansprüche, **dadurch gekennzeichnet, dass** der Gewindetrieb (12) mit der Spindelmutter (13) und der Gewindespindel (14) als ein Kugelgewindetrieb ausgebildet sind.

5. Kompakt-Bremszange (1) nach einem der vorhergehenden Ansprüche,
**dadurch gekennzeichnet, dass** der Exzenterwellenantrieb (8) drehfest mit einem Exzenterwellenhebel (21) verbunden ist, welcher über sein freies Ende mit dem Aktuatormodul (7) zusammenwirkend gekoppelt ist.

6. Kompakt-Bremszange (1) nach Anspruch 5, **dadurch gekennzeichnet, dass** an einem freien Ende der Gewindespindel (14), welches aus der Spindelmutter (13) zu dem Exzenterwellenhebel (21) hervorsteht, ein Druckstück (17) verdrehfest in Bezug auf die Gewindespindel (14) befestigt ist und mit dem Exzenterwellenhebel (21) gekoppelt ist.

7. Kompakt-Bremszange (1) nach Anspruch 6, **dadurch gekennzeichnet, dass** das Druckstück (17) einen ersten Übertragungsabschnitt (17a), einen zweiten Übertragungsabschnitt (17b) und einen Führungsabschnitt (17c) aufweist, welche einen U-förmigen Zwischenraum in Hakenform festlegen, wobei der Zwischenraum mit dem freien Ende des Exzenterwellenhebels (21) über eine drehbare Stützrolle (19), welche zwischen dem ersten Übertragungsabschnitt (17a) und dem zweiten Übertragungsabschnitt (17b) angeordnet ist ,zusammenwirkt und eine Kopplung zwischen dem Exzenterwellenhebel (21) und dem Aktuatormodul (7) bildet.

8. Kompakt-Bremszange (1) nach Anspruch 7, **dadurch gekennzeichnet, dass** das Druckstück (17) in einer Linearführung (18) eines Motorschildes (9b) des Aktuatormodulgehäuses (9a) mittels des Führungsabschnitts (17c) axial verschiebbar geführt angeordnet und darin gegen Verdrehen um eine Spindelachse (14a) der Gewindespindel (14) gesichert ist, wodurch die Gewindespindel (14) axial in Richtung Spindelachse (14a) verschiebbar und gleichzeitig gegen Verdrehen gesichert angeordnet ist.

9. Kompakt-Bremszange (1) nach einem der vorhergehenden Ansprüche,
**dadurch gekennzeichnet, dass** die Motorbremse (15) als eine passive Motorbremse (15) ausgebildet ist, wobei die Motorbremse (15) mit einem ersten Abschnitt im Aktuatormodulgehäuse (9a) befestigt und mit einem zweiten Abschnitt formschlüssig mit der Hohlwelle (11) verbunden ist.

10. Kompakt-Bremszange (1) nach Anspruch 9, **dadurch gekennzeichnet, dass** die Motorbremse (15) aus einem ersten Betriebszustand, in welchem der im Aktuatormodulgehäuse (9a) befestigte erste Abschnitt mit ihrem mit der Hohlwelle (11) verbundenen zweiten Abschnitt eine verdrehfeste, z.B. formschlüssige oder reibschlüssige, Verbindung bildet und die Hohlwelle (11) blockiert ist, in einen zweiten Betriebszustand, in welchem die feste Verbindung zwischen ihrem im Aktuatormodulgehäuse (9a) befestigten ersten Abschnitt und ihrem mit der Hohlwelle (11) verbundenen zweiten Abschnitt aufgehoben ist, wobei die Hohlwelle (11) verdrehbar ist, und zurück schaltbar ist.

11. Kompakt-Bremszange (1) nach einem der vorhergehenden Ansprüche, **dadurch gekennzeichnet, dass** ein Winkelsensor (23) mit der Hohlwelle (11) gekoppelt ist, Winkelstellungen der Hohlwelle (11) erfasst und mit einer Steuerung (16a) der Steuereinheit (16) zur Übertragung von erfassten Messdaten der Winkelstellungen der Hohlwelle (11) verbunden ist.

12. Kompakt-Bremszange (1) nach einem der vorhergehenden Ansprüche,
**dadurch gekennzeichnet, dass** die Hohlwelle (11) über ein Axiallager (25) auf einen im Aktuatormodulgehäuse (9a) angeordneten Kraftsensor (22) abgestützt ist, welcher mit der Steuerung (16a) der Steuereinheit (16) zur Übertragung von erfassten Messdaten verbunden ist.

13. Kompakt-Bremszange (1) nach einem der vorhergehenden Ansprüche, **dadurch gekennzeichnet, dass** das Aktuatormodul (7) mit dem Aktuatormodulgehäuse (9a), dem Elektromotor (10), der Hohlwelle (11), dem Gewindetrieb (12) mit der Spindelmutter (13) und der Gewindespindel (14), der Motorbremse (15) und der Steuereinheit (16) eine komplett vormontierte Baueinheit ist.

14. Kompakt-Bremszange (1) nach einem der vorhergehenden Ansprüche, **dadurch gekennzeichnet, dass** das Nachstellermodul (6) ein mechanisches Nachstellermodul (6) ist und über eine Druckstange (6a) in Zusammenwirkung mit dem Exzenterwellenantrieb (8) angetrieben ist.

15. Verfahren zum Betreiben einer Kompakt-Bremszange (1) einer Scheibenbremse, insbesondere für Schienenfahrzeuge, aufweisend zwei Zangenhebel (2, 3), zwei Bremsbeläge (4, 5), ein Nachstellermodul (6), ein Aktuatormodul (7) und einen Exzenterwellenantrieb (8),
wobei das Aktuatormodul (7) mit einem Aktuatormodulgehäuse (9a) ausgebildet ist, in welchem ein Elektromotor (10), eine Hohlwelle (11), ein Gewindetrieb (12) mit einer Spindelmutter (13) und einer Gewindespindel (14), eine Motorbremse (15) und eine Steuereinheit (16) angeordnet sind,
**gekennzeichnet durch** die Verfahrensschritte
(VS1) Zuspannen der Kompakt-Bremszange (1) entweder für eine Betriebsbremsung oder für eine Feststellbremsung mittels Einschalten des Elektromotors (10) des Aktuatormoduls (7) in einer ersten Drehrichtung, wenn die Position des Elektromotors (10) einem vorher festgelegten Wert oder Wertebereich einer gelösten Stellung der Kompakt-Bremszange (1) entspricht und die Motorbremse (15) des Aktuatormoduls (7) in ihrem zweiten Betriebszustand ist, der anzeigt, dass die Hohlwelle (11) des Aktuatormoduls (7) nicht blockiert ist;
(VS2) Ausschalten des Elektromotors (10) und gleichzeitiges Einschalten des ersten Betriebszustand der Motorbremse (15), wenn Messwerte eines Kraftsensors (22) und/oder eines Winkelsensors (23) jeweils einen vorher festgelegten Wert erreichen bzw. überschreiten, welcher der zugespannten Stellung der Kompakt-Bremszange (1) als Betriebsbremsstellung oder als Feststellbremsstellung entspricht, wobei die Hohlwelle (11) blockiert wird und die zugespannte Stellung der Kompakt-Bremszange (1) in der Betriebsbremsstellung oder in der Feststellbremsstellung aufrecht erhalten wird;
(VS3) Lösen der Kompakt-Bremszange (1) aus der Betriebsbremsstellung oder aus der Feststellbremsstellung mittels Einschalten des zweiten Betriebszustandes der Motorbremse (15), wobei die Blockierung der Hohlwelle (11) aufgehoben wird, und Einschalten des Elektromotors (10) in einer zweiten Drehrichtung, welche entgegengesetzt zu der ersten Drehrichtung ist, wenn die Messwerte des Kraftsensors (22) und/oder des Winkelsensors (23) einem vorher festgelegten Wert oder Wertebereich der zugespannten Stellung der Kompakt-Bremszange (1) in der Betriebsbremsstellung oder in der Feststellbremsstellung entsprechen und die Motorbremse (15) in ihrem ersten Betriebszustand ist, der anzeigt, dass die Hohlwelle (11) blockiert ist, und gleichzeitiges Abschalten des Elektromotor (10) und Einschalten des ersten Betriebszustandes der Motorbremse (15), wobei die Hohlwelle (11) blockiert wird und die gelöste Stellung der Kompakt-Bremszange (1) aufrecht erhalten wird, wenn die Messwerte des Kraftsensors (22) und/oder des Winkelsensors (23) einen vorher festgelegten Wert erreichen bzw. unterschreiten, welcher der gelösten Stellung der Kompakt-Bremszange (1) entspricht.

16. Verfahren nach Anspruch 15,
**dadurch gekennzeichnet, dass** die Messwerte des Kraftsensors (22) und des Winkelsensors (23) ständig erfasst, überwacht und für eine kontinuierliche Regelung verwendet werden.

17. Verfahren nach Anspruch 15 oder 16,
**dadurch gekennzeichnet, dass** die erfassten Messwerte des Kraftsensors (22) und des Winkelsensors (23) als Verlauf oder End- bzw. Momentanwerte zur Überwachung und/oder Dokumentation der Brems- und Lösevorgänge der Kompakt-Bremszange (1) sowie für ein kontrolliertes Verschleißmanagement gespeichert werden.

18. Verfahren nach einem der Ansprüche 15 bis 17,
**dadurch gekennzeichnet, dass** die Kompakt-Bremszange (1) nach einem der Ansprüche 1 bis 14 ausgebildet ist.

## Claims

1. Compact brake caliper (1) of a disc brake, in particular for rail vehicles, having two caliper levers (2, 3), two brake linings (4, 5), an adjustment module (6), an electromechanical brake force generator and a camshaft drive (8),
**characterized in that**
the electromechanical brake force generator cooperates as an actuator module (7) with the camshaft drive (8) and is constructed with an actuator module housing (9a) in which an electric motor (10), a hollow shaft (11), a screw drive (12) having a spindle nut (13) and a threaded spindle (14), a motor brake (15) and a controller (16) are arranged.

2. Compact brake caliper (1) according to claim 1, **characterized in that** the electric motor (10) has an electrically commutated permanent magnet motor as a hollow shaft motor having a stator (10a) which is secured in the actuator module housing (9a), and having a rotatable rotor (10b) which is secured to the hollow shaft (11).

3. Compact brake caliper (1) according to claim 1 or 2, **characterized in that** the screw drive (12) with the spindle nut (13) and the threaded spindle (14) is arranged in recesses (11f, 11g) of the hollow shaft (11), wherein the spindle nut (13) is arranged in the hollow shaft (11) in a rotationally secure manner with respect to the hollow shaft (11).

4. Compact brake caliper (1) according to any one of the preceding claims, **characterized in that** the screw drive (12) with the spindle nut (13) and the threaded spindle (14) are in the form of a ball screw drive.

5. Compact brake caliper (1) according to any one of the preceding claims, **characterized in that** the camshaft drive (8) is connected in a rotationally secure manner to a camshaft lever (21) which is coupled by means of the free end thereof so as to cooperate with the actuator module (7).

6. Compact brake caliper (1) according to claim 5, **characterized in that** at a free end of the threaded spindle (14), which protrudes from the spindle nut (13) relative to the camshaft lever (21), a pressure piece (17) is secured in a torsion-resistant manner with respect to the threaded spindle (14) and is coupled to the camshaft lever (21).

7. Compact brake caliper (1) according to claim 6, **characterized in that** the pressure piece (17) has a first transmission portion (17a), a second transmission portion (17b) and a guide portion (17c) which define a U-shaped intermediate space of hook form, wherein the intermediate space cooperates with the free end of the camshaft lever (21) via a rotatable support roller (19) which is arranged between the first transmission portion (17a) and the second transmission portion (17b) and forms a coupling between the camshaft lever (21) and the actuator module (7).

8. Compact brake caliper (1) according to claim 7, **characterized in that** the pressure piece (17) is arranged so as to be guided in an axially displaceable manner in a linear guide (18) of a motor plate (9b) of the actuator module housing (9a) by means of the guide portion (17c) and is secured therein against rotating about a spindle axis (14a) of the threaded spindle (14), whereby the threaded spindle (14) is arranged so as to be able to be axially displaced in the direction of the spindle axis (14a) and at the same time is arranged so as to be secured against torsion.

9. Compact brake caliper (1) according to any one of the preceding claims, **characterized in that** the motor brake (15) is in the form of a passive motor brake (15), wherein the motor brake (15) is secured to a first portion in the actuator module housing (9a) and is connected in a positive-locking manner to the hollow shaft (11) with a second portion.

10. Compact brake caliper (1) according to claim 9, **characterized in that** the motor brake (15) can be switched from a first operating state, in which the first portion which is secured in the actuator module housing (9a) forms with the second portion thereof which is connected to the hollow shaft (11) a torsion-resistant, for example, positive-locking or frictionally engaging connection and the hollow shaft (11) is blocked, into a second operating state in which the secure connection between the first portion thereof which is secured in the actuator module housing (9a) and the second portion thereof which is connected to the hollow shaft (11) is cancelled, wherein the hollow shaft (11) can be rotated.

11. Compact brake caliper (1) according to any one of the preceding claims, **characterized in that** an angle sensor (23) is coupled to the hollow shaft (11), detects angular positions of the hollow shaft (11) and is connected to a control (16a) of the controller (16) in order to transmit detected measurement data of the angular positions of the hollow shaft (11).

12. Compact brake caliper (1) according to any one of the preceding claims, **characterized in that** the hollow shaft (11) is supported by means of an axial bearing (25) on a force sensor (22) which is arranged in the actuator module housing (9a) and which is connected to the control (16a) of the controller (16) in order to transmit detected measurement data.

13. Compact brake caliper (1) according to any one of the preceding claims, **characterized in that** the actuator module (7) with the actuator module housing (9a), the electric motor (10), the hollow shaft (11), the screw drive (12) with the spindle nut (13) and the threaded spindle (14), the motor brake (15) and the controller (16) is a completely pre-assembled structural unit.

14. Compact brake caliper (1) according to any one of the preceding claims, **characterized in that** the adjustment module (6) is a mechanical adjustment module (6) and is driven by means of a pressure rod (6a) together with the camshaft drive (8).

15. Method for operating a compact brake caliper (1) of a disc brake, in particular for rail vehicles, having two caliper levers (2, 3), two brake linings (4, 5), an adjustment module (6), an actuator module (7) and a camshaft drive (8).
wherein the actuator module (7) is formed with the actuator module housing (9a) in which an electric motor (10), a hollow shaft (11), a screw drive (12) having a spindle nut (13) and a threaded spindle (14), a motor brake (15) and a controller (16) are arranged,
**characterized by** the method steps of
(VS1) applying the compact brake caliper (1) either for a brake operation or for a parking brake operation by switching on the electric motor (10) of the actuator module (7) in a first rotation direction when the position of the electric motor (10) corresponds to a previously fixed value or value range of a released position of the compact brake caliper (1) and the motor brake (15) of the actuator module (7) is in the second operating state thereof which indicates that the hollow shaft (11) of the actuator module (7) is not blocked;
(VS2) switching off the electric motor (10) and at the same time switching on the first operating state of the motor brake (15) when measurement values of a force sensor (22) and/or an angle sensor (23) in each case reach or exceed a previously determined value which corresponds to the applied position of the compact brake caliper (1) as a service brake position or as a parking brake position, wherein the hollow shaft (11) is blocked and the applied position of the compact brake caliper (1) is maintained in the service brake position or in the parking brake position;
(VS3) releasing the compact brake caliper (1) from the service brake position or from the parking brake position by switching on the second operating state of the motor brake (15), wherein the blocking of the hollow shaft (11) is cancelled, and switching on the electric motor (10) in a second rotation direction which is opposed to the first rotation direction when the measurement values of the force sensor (22) and/or the angle sensor (23) correspond to a previously determined value or value range of the applied position of the compact brake caliper (1) in the service brake position or in the parking brake position and the motor brake (15) is in the first operating state thereof which indicates that the hollow shaft (11) is blocked and at the same time switching off the electric motor (10) and switching on the first operating state of the motor brake (15), wherein the hollow shaft (11) is blocked and the released position of the compact brake caliper (1) is maintained when the measurement values of the force sensor (22) and/or the angle sensor (23) reach or fall below a previously determined value which corresponds to the released position of the compact brake caliper (1).

16. Method according to claim 15,
**characterized in that** the measurement values of the force sensor (22) and the angle sensor (23) are continuously detected, monitored and used for continuous control.

17. Method according to claim 15 or 16,
**characterized in that** the detected measurement values of the force sensor (22) and the angle sensor (23) are stored as a path or final or instantaneous values for monitoring and/or documentation of the braking and release operations of the compact brake caliper (1) and for a controlled wear management.

18. Method according to any one of claims 15 to 17,
**characterized in that** the compact brake caliper (1) is constructed according to any one of claims 1 to 14.

## Revendications

1. Étrier de frein compact (1) d'un frein à disque, en particulier pour des véhicules ferroviaires, présentant deux leviers d'étrier (2, 3), deux plaquettes de frein (4, 5), un module de réglage (6), un générateur de force de freinage électromécanique et un entraînement d'arbre à came (8),
**caractérisé en ce que**
le générateur de force de freinage électromécanique coagit comme un module actionneur (7) avec l'entraînement d'arbre à came (8) et est configuré avec un boîtier de module actionneur (9a), dans lequel sont agencés un moteur électrique (10), un arbre creux (11), un entraînement à vis (12) avec un écrou de broche (13) et une broche filetée (14), un frein moteur (15) et un dispositif de commande (16).

2. Étrier de frein compact (1) selon la revendication 1, **caractérisé en ce que** le moteur électrique (10) présente un moteur d'aimant permanent à commutation électrique comme moteur d'arbre creux avec un stator (10a) qui est fixé dans le boîtier de module actionneur (9a), et avec un rotor (10b) rotatif qui est fixé sur l'arbre creux (11).

3. Étrier de frein compact (1) selon la revendication 1 ou 2, **caractérisé en ce que** l'entraînement à vis (12) avec l'écrou de broche (13) et la broche filetée (14) est agencé dans des évidements (11f, 11g) de l'arbre creux (11), dans lequel l'écrou de broche (13) est agencé dans l'arbre creux (11) sans pouvoir tourner par rapport à l'arbre creux (11).

4. Étrier de frein compact (1) selon l'une quelconque des revendications précédentes, **caractérisé en ce que** l'entraînement à vis (12) est configuré avec l'écrou de broche (13) et la broche filetée (14) est configurée comme entraînement fileté à billes.

5. Étrier de frein compact (1) selon l'une quelconque des revendications précédentes, **caractérisé en ce que** l'entraînement d'arbre à came (8) est relié sans pouvoir tourner à un levier d'arbre à came (21) qui est couplé par coopération par le biais de son extrémité libre au module actionneur (7).

6. Étrier de frein compact (1) selon la revendication 5, **caractérisé en ce qu'** une pièce de pression (17) est fixée sans pouvoir tourner par rapport à la broche filetée (14) et est couplée au levier d'arbre à came à une extrémité libre de la broche filetée (14) qui dépasse de l'écrou de broche (13) vers le levier d'arbre à came (21).

7. Étrier de frein compact (1) selon la revendication 6, **caractérisé en ce que** la pièce de pression (17) présente une première section de transmission (17a), une seconde section de transmission (17b) et une section de guidage (17c) qui définissent un espace intermédiaire en U sous la forme d'un crochet, dans lequel l'espace intermédiaire coagit avec l'extrémité libre du levier d'arbre à came (21) par le biais d'un rouleau d'appui (19) rotatif qui est agencé entre la première section de transmission (17a) et la seconde section de transmission (17b) et forme un couplage entre le levier d'arbre à came (21) et le module actionneur (7).

8. Étrier de frein compact (1) selon la revendication 7, **caractérisé en ce que** la pièce de pression (17) est agencée guidée de manière mobile axialement dans un guidage linéaire (18) d'une plaque moteur (9b) du boîtier de module actionneur (9a) au moyen de la section de guidage (17c) et est fixée dedans contre la rotation autour d'un axe de broche (14a) de la broche filetée (14), selon lequel la broche filetée (14) est agencée de manière mobile axialement en direction de l'axe de broche (14a) et simultanément de manière fixe contre la rotation.

9. Étrier de frein compact (1) selon l'une quelconque des revendications précédentes, **caractérisé en ce que** le frein moteur (15) est configuré comme un frein moteur (15) passif, dans lequel le frein moteur (15) est fixé avec une première section dans le boîtier de module actionneur (9a) et est relié avec une seconde section par complémentarité de formes à l'arbre creux (11).

10. Étrier de frein compact (1) selon la revendication 9, **caractérisé en ce que** le frein moteur (15) peut être commuté d'un premier état de fonctionnement, dans lequel la première section fixée dans le boîtier de module actionneur (9a) forme avec sa seconde section reliée à l'arbre creux (11) une liaison résistante à la rotation, par exemple à complémentarité de formes ou à friction et l'arbre creux (11) est bloqué, dans un second état de fonctionnement, dans lequel la liaison fixe entre sa première section fixée dans le boîtier de module actionneur (9a) et sa seconde section reliée à l'arbre creux (11) est supprimée, dans lequel l'arbre creux (11) est rotatif, et inversement.

11. Étrier de frein compact (1) selon l'une quelconque des revendications précédentes, **caractérisé en ce qu'un** capteur angulaire (23) est couplé à l'arbre creux (11), détecte des positions angulaires de l'arbre creux (11) et est relié à une commande (16a) du dispositif de commande (16) pour la transmission de données de mesure détectées des positions angulaires de l'arbre creux (11).

12. Étrier de frein compact (1) selon l'une quelconque des revendications précédentes, **caractérisé en ce que** l'arbre creux (11) est en appui par le biais d'un palier axial (25) sur un capteur de force (22) agencé dans le boîtier de module actionneur (9a) qui est relié à la commande (16a) du dispositif de commande (16) pour la transmission de données de mesure détectées.

13. Étrier de frein compact (1) selon l'une quelconque des revendications précédentes, **caractérisé en ce que** le module actionneur (7) avec le boîtier de module actionneur (9a), le moteur électrique (10), l'arbre creux (11), l'entraînement à vis (12) avec l'écrou de broche (13) et la broche filetée (14), le frein moteur (15) et le dispositif de commande (16) est une unité de construction complètement prémontée.

14. Étrier de frein compact (1) selon l'une quelconque des revendications précédentes, **caractérisé en ce quele** module de réglage (6) est un module de réglage (6) mécanique et est entraîné par le biais d'une tige de pression (6a) en coaction avec l'entraînement d'arbre à came (8).

15. Procédé de fonctionnement d'un étrier de frein compact (1) d'un frein à disque, en particulier pour des véhicules ferroviaires, présentant deux leviers d'étrier (2, 3), deux plaquettes de frein (4, 5), un module de réglage (6), un module actionneur (7) et un entraînement d'arbre à came (8),
dans lequel le module actionneur (7) est configuré avec un boîtier de module actionneur (9a), dans lequel sont agencés un moteur électrique (10), un arbre creux (11), un entraînement à vis (12) avec un écrou de broche (13) et une broche filetée (14), un frein de moteur (15) et un dispositif de commande (16),
**caractérisé par** les étapes de procédé suivantes
(VS1) le serrage de l'étrier de frein compact (1) pour un freinage de fonctionnement ou pour un freinage de stationnement au moyen de la mise en service du moteur électrique (10) du module actionneur (7) dans un premier sens de rotation, lorsque la position du moteur électrique (10) correspond à une valeur ou plage de valeurs fixée précédemment d'une position détachée de l'étrier de frein compact (1) et le frein moteur (15) du module actionneur (7) est dans son second état de fonctionnement qui indique que l'arbre creux (11) du module actionneur (7) n'est bloqué ;
(VS2) la mise hors service du moteur électrique (10) et la mise en service simultanée du premier état de fonctionnement du frein moteur (15), lorsque des valeurs de mesure d'un capteur de force (22) et/ou d'un capteur angulaire (23) atteignent ou dépassent respectivement une valeur fixée précédemment qui correspond à la position serrée de l'étrier de frein compact (1) comme position de frein de fonctionnement ou comme position de frein de stationnement, dans lequel l'arbre creux (11) est bloqué et la position serrée de l'étrier de frein compact (1) est maintenue dans la position de frein de fonctionnement ou dans la position de frein de stationnement ;
(VS3) le détachement de l'étrier de frein compact (1) de la position de frein de fonctionnement ou de la position de frein de stationnement au moyen de la mise en service du second état de fonctionnement du frein moteur (15), dans lequel le blocage de l'arbre creux (11) est supprimé, et la mise en service du moteur électrique (10) dans un second sens de rotation qui est opposé au premier sens de rotation lorsque les valeurs de mesure du capteur de force (22) et/ou du capteur angulaire (23) correspondent à une valeur ou plage de valeurs fixée précédemment de la position serrée de l'étrier de frein compact (1) dans la position de frein de fonctionnement ou dans la position de frein de stationnement et le frein moteur (15) est dans son premier état de fonctionnement qui indique que l'arbre creux (11) est bloqué, et la mise hors service simultanée du moteur électrique (10) et la mise en service du premier état de fonctionnement du frein moteur (15), dans lequel l'arbre creux (11) est bloqué et la position détachée de l'étrier de frein compact (1) est conservée lorsque les valeurs de mesure du capteur de force (22) et/ou du capteur angulaire (23) atteignent ou n'atteignent pas une valeur définie précédemment qui correspond à la position détachée de l'étrier de frein compact (1).

16. Procédé selon la revendication 15,
**caractérisé en ce que** les valeurs de mesure du capteur de force (22) et du capteur angulaire (23) sont détectés en permanence, surveillées et utilisées pour une régulation continue.

17. Procédé selon la revendication 15 ou 16,
**caractérisé en ce que** les valeurs de mesure détectées du capteur de force (22) et du capteur angulaire (23) sont enregistrées comme tracé ou valeurs finales ou momentanées de surveillance et/ou de documentation des processus de freinage et de détachement de l'étrier de frein compact (1) ainsi que pour une gestion d'usure commandée.

18. Procédé selon l'une quelconque des revendications 15 à 17,
**caractérisé en ce que** l'étrier de frein compact (1) est configuré selon l'une quelconque des revendications 1 à 14.
